# EUROPEAN PATENT APPLICATION

(11) **EP 4 471 281 A1**
(43) Date of publication of application: **04.12.2024**
(21) Application number: 24175245.0
(22) Date of filing: 10.05.2024
(51) Int. Cl.: F16B 33/00, B64D 45/02, F16B 33/06, B05D 1/00

(54) **COATED FASTENER AND COATING METHOD AND APPARATUS THEREFOR**

(30) Priority: 31.05.2023 US 202318326179
(71) Applicant: The Boeing Company, Arlington, VA 22202 (US)
(72) Inventor: Yakel, Seth, Arlington, 22202 (US); Chan, Kwok Tung, Arlington, 22202 (US)
(74) Representative: Collins, Emily Jane

(57) **Abstract**

A coated fastener includes a core body comprising conductive material and including a first portion and a second portion. The coated fastener also includes a first coating comprising dielectric material and disposed on the first portion of the core body. The coated fastener further includes a second coating comprising a conductive friction modifier material and disposed on the second portion of the core body to provide the fastener with a desired transition hold fit, improved lubricity, and improved electromagnetic effects protection.

## Description

### FIELD

The present disclosure generally relates to fasteners, more particularly, to coated fasteners, methods and apparatuses for coating a fastener with a conductive friction modifier material, such as a graphite-based material.

### BACKGROUND

An aerospace fastener is a known type of fastener. A typical aerospace fastener is made of conductive core material that is coated with dielectric material.

The coating of dielectric material provides the fastener with lubrication properties. The coating of dielectric material also prevents galvanic corrosion between the conductive core material of the fastener and the material to which the fastener is secured.

In the event of an insufficient connection between the fastener and the material to which the fastener is secured, there is insufficient conduction through the conductive core material of the fastener. The result is high current density through the conductive core material, and therefore high heat generated in the fastener.

Despite advances already made, those skilled in the art continue with research and development efforts in the field of coating fasteners including aerospace fasteners.

### SUMMARY

Disclosed are coated fasteners.

In one example, the disclosed coated fastener includes a core body comprising conductive material and including a first portion and a second portion. The coated fastener also includes a first coating comprising dielectric material and disposed on the first portion of the core body. The coated fastener further includes a second coating comprising a conductive friction modifier material and disposed on the second portion of the core body to provide the fastener with a desired transition hold fit, improved lubricity, and improved electromagnetic effects protection.

Also disclosed are fastener coating methods.

In one example, the disclosed fastener coating method includes rotating a fastener about its longitudinal central axis The fastener coating method also includes applying a conductive friction modifier material on a non-threaded portion of the fastener as the fastener is rotating about its longitudinal central axis.

Also disclosed are coated fasteners that are made of a material from a select one of stainless steel, nickel-based superalloy (e.g., Inconel alloy, such as Inconel 625), and titanium or titanium alloy (e.g., Ti-6Al-4V), and coated according to the fastener coating method.

Also disclosed are apparatuses for coating fasteners.

In one example, the disclosed coating apparatus includes a first device for securing a fastener in place to be coated. The coating apparatus also includes a second device for rotating the fastener about its longitudinal central axis. The coating apparatus further includes a third device for applying a conductive friction modifier material on a non-threaded portion of the fastener when the fastener is secured in place to be coated and is rotated about its longitudinal central axis as the conductive friction modifier material is being applied on the non-threaded portion of the fastener.

Other examples of the disclosed coated fasteners, fastener coating apparatuses, and fastener coating methods will become apparent from the following detailed description, the accompanying drawings and the appended claims.

### BRIEF DESCRIPTION OF THE DRAWINGS

Fig. 1A is a perspective view of a coated fastener constructed in accordance with an example implementation.
Fig. 1B is a cross-sectional view, taken approximately along line 1B-1B in Fig. 1A, showing coating layers of the coated fastener in accordance with an example implementation.
Fig. 1C is a cross-sectional view similar to the cross-sectional view of Fig. 1B, showing coating layers of the fastener in accordance with another example implementation.
Fig. 2 is a schematic diagram of an apparatus for coating the fastener of Fig. 1A, and constructed in accordance with an example implementation.
Fig. 3 is a flow diagram depicting a method for coating the fastener of Fig. 1A in accordance with an example implementation.
Fig. 4 is a block diagram of aircraft production and service methodology.
Fig. 5 is a schematic illustration of an aircraft.

### DETAILED DESCRIPTION

The present application is directed to a coated fastener, a fastener coating apparatus, and a fastener coating method in a manufacturing environment, such as an aerospace part manufacturing environment. The specific construction of the fastener, apparatus, method, and the industry in which the fastener, apparatus, and method are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes a coated fastener, a fastener coating apparatus, and a fastener coating method in the manufacturing of aerospace parts. The fastener, apparatus, and method may be implemented by an original equipment manufacturer (OEM) in compliance with military and space regulations. It is conceivable that the disclosed fastener, apparatus, and method may be implemented in many other industries.

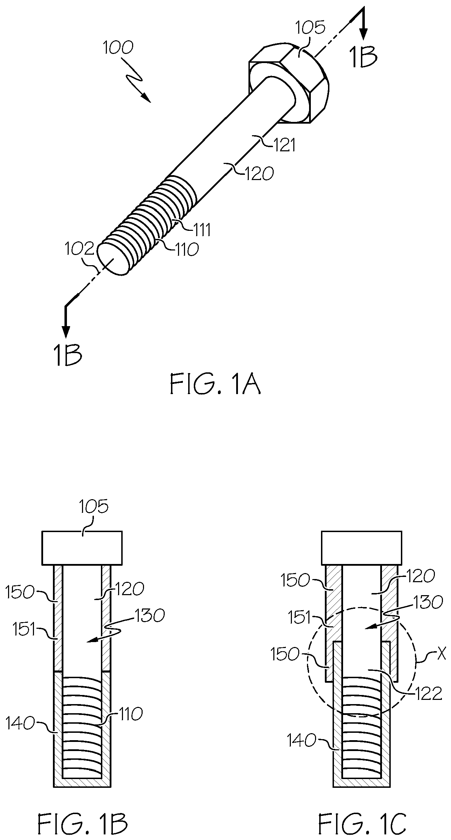

Referring to Fig. 1A, a perspective view of a coated fastener 100 constructed in accordance with an example implementation is illustrated. Fig. 1B is a cross-sectional view taken approximately along line 1B-1B in Fig. 1A, and shows coating layers of the coated fastener 100 in accordance with an example implementation. The fastener 100 has a longitudinal central axis 102.

The fastener 100 includes a head portion 105 and a first portion 110 that is distal from the head portion 105. The fastener 100 may also include a second portion 120 that is disposed between the head portion 105 and the first portion 110. The first portion 110 of the fastener 100 may include threads (i.e., may be a threaded portion 111), while the second portion 120 of the fastener 100 may be substantially free of threads (i.e., a non-threaded portion 121), such as a shank.

The fastener 100 includes a core body 130 (Fig. 1B) that comprises conductive material. The conductive material of the core body 130 may comprise a select one of stainless steel, nickel-based superalloy (e.g., Inconel alloy, such as Inconel 625), and titanium or titanium alloy (e.g., Ti-6A1-4V). Other types of conductive material are possible. The core body 130 includes the first portion 110 and the second portion 120.

The fastener 100 also includes a first coating 140 that comprises dielectric material, such as a lubricious dielectric material. The dielectric material of the first coating 140 may by a coating in compliance with National Aerospace Standard NAS 4006. As one specific, nonlimiting example, the first coating 140 may be HI-KOTE^{™} coating commercially available from Lisi Aerospace of Paris, France. Other types of dielectric materials are possible. The first coating 140 is disposed on the first portion 110 of the core body 130.

The fastener 100 further includes a second coating 150 that comprises a conductive friction modifier material 151. The conductive friction modifier material 151 of the second coating 150 may comprise one of (or a combination of) graphite, a graphic alloy, and a graphic-based material. As an example, the graphite-based material may be graphite. The second coating 150 is disposed on the second portion 120 of the core body 130. The second coating 150 may have a coating layer thickness between about 0.1 mil to about 1 mil, wherein 1 mil equals 0.001 inch.

Although the above-description describes the first coating 140 being disposed on the first portion 110 of the core body 130 and the second coating 150 being disposed on the second portion 120 of the core body 130, it is conceivable that some of the first coating 140 is also disposed on the second portion 120. For example, as shown in a region designated with circle "X" in Fig. 1C, some of the first coating 140 is also disposed on at least part 122 of the second portion 120. In the region X, the second coating 150 is disposed on top of the some of the first coating 140 that is disposed on the at least part 122 of the second portion 120 of the core body 130.

A number of advantages are provided by coating the fastener 100 with a combination of graphite, a graphic alloy, and a graphic-based material disclosed herein. One advantage is that the fastener 100 is provided with a desired transition hole fit (e.g., a light interference fit, a net fit, a slight clearance fit, a high interference fit, and clearance fit applications).

Another advantage is that the fastener 100 is provided with improved lubricity. The second coating 150 prevents bare metal of the shank (i.e., the second portion 120) of the fastener 100 from rubbing directly against hard metal (e.g., titanium) in a hole bore. The galling effects from this rubbing action is prevented or at least reduced due to the improved lubricity provided by the second coating 150.

Yet another advantage is that the fastener 100 is provided with improved electromagnetic effects protection since the second coating 150 improves conduction through the conductive material of the core body 130 of the fastener 100. The result is lower current density through the conductive material of the core body 130, and therefore less heat generated in the core body 130.

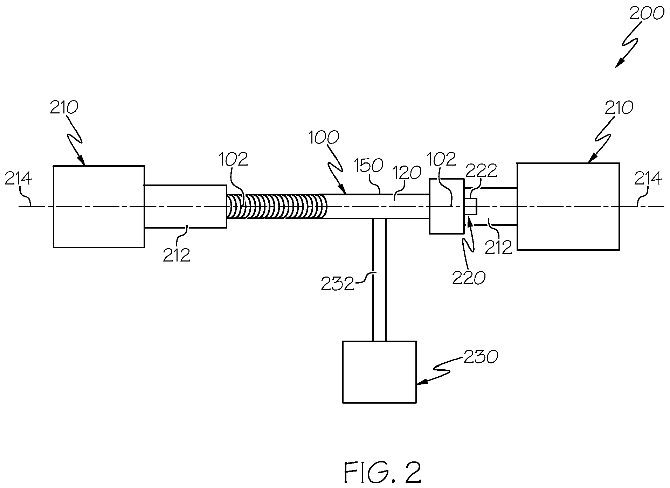

Referring to Fig. 2, a schematic diagram of a coating apparatus 200 for coating the fastener 100 of Fig. 1A, and constructed in accordance with an example implementation, is illustrated. The coating apparatus 200 includes a first device 210 for securing the fastener 100 in place to be coated. The first device 210 includes a spindle mechanism 212 having a spindle axis 214 that is congruent with the longitudinal central axis 102 of the fastener 100 when the fastener 100 is secured in place to be coated.

The coating apparatus 200 also includes a second device 220 for rotating the fastener 100 about its longitudinal central axis 102. The second device 220 includes a drive mechanism 222 that is arranged to rotate the fastener 100 about its longitudinal central axis 102 when the conductive friction modifier material 151 is applied on the non-threaded portion 121 of the fastener 100.

The coating apparatus 200 further includes a third device 230 for applying conductive friction modifier material 151 on the non-threaded portion 121 (i.e., the second portion 120) of the fastener 100 when the fastener 100 is secured in place to be coated and is rotated about its longitudinal central axis 102 as conductive friction modifier material 151 is being applied on the second portion 120 of the fastener 100. In particular, the third device 230 includes a feed mechanism 232 that is arranged to move conductive friction modifier material 151 into contact with the second portion 120 of the fastener 100 to provide the conductive friction modifier material 151 when the fastener 100 is rotated about its longitudinal central axis 102.

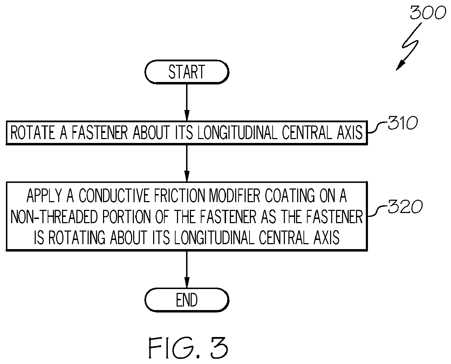

Referring to Fig. 3, a flow diagram depicts a coating method 300 for coating the fastener 100 of Fig. 1A in accordance with an example implementation. In block 310, the fastener 100 is rotated about its longitudinal central axis 102. The process proceeds to block 320 in which a conductive friction modifier material 151 is applied on the second portion 120 of the fastener 100 as the fastener 100 is rotating about its longitudinal central axis 102. The process then ends
In some embodiments, a second coating 150 that includes a graphite-based material is applied on the second portion 120 of the fastener 100 as the fastener 100 is rotating about its longitudinal central axis 102.

In some embodiments, a second coating 150 that includes a graphite-based material is mechanically rubbed on the second portion 120 of the fastener 100 as the fastener 100 is rotating about its longitudinal central axis 102.

In some embodiments, a second coating 150 that includes a graphite-based material is applied by mechanically spraying on the second portion 120 of the fastener 100 as the fastener 100 is rotating about its longitudinal central axis 102.

In some embodiments, the coating method further comprises securing the fastener 100 in place as the fastener 100 is rotating about its longitudinal central axis 102 and the conductive friction modifier material 151 is being applied on the second portion 120 of the fastener 100.

In some embodiments, a fastener made of a material from a select one of stainless steel, nickel-based superalloy (e.g., Inconel alloy, such as Inconel 625), and titanium or titanium alloy (e.g., Ti-6Al-4V) is coated according to the coating method 300.

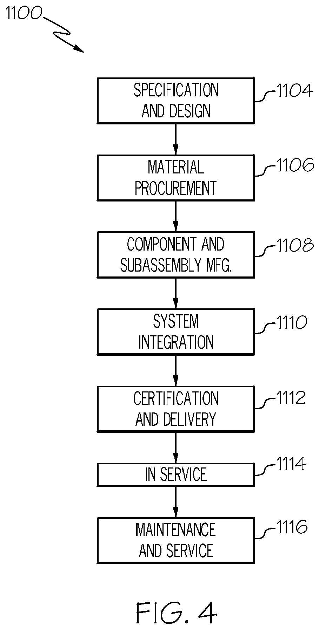

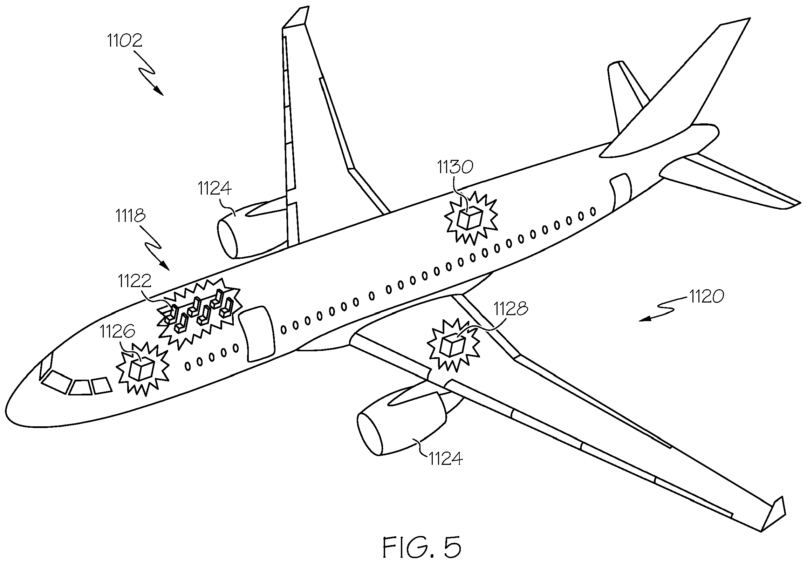

Examples of the disclosure may be described in the context of an aircraft manufacturing and service method 1100, as shown in Fig. 4, and an aircraft 1102, as shown in Fig. 5. During pre-production, the aircraft manufacturing and service method 1100 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 5, the aircraft 1102 produced by example method 1100 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed apparatus and method may be employed during any one or more of the stages of the aircraft manufacturing and service method 1100. As one example, components or subassemblies corresponding to component/subassembly manufacturing 1108, system integration 1110, and/or maintenance and service 1116 may be assembled using the disclosed apparatus and method. As another example, the airframe 1118 may be constructed using the disclosed apparatus and method. Also, one or more apparatus examples, method examples, or a combination thereof may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more apparatus examples, method examples, or a combination thereof may be utilized while the aircraft 1102 is in service, for example and without limitation, to maintenance and service 1116.

The disclosure also includes the following clauses:
Clause 1. A coated fastener comprising:
   a core body comprising conductive material and including a first portion and a second portion;
   a first coating comprising dielectric material and disposed on the first portion of the core body; and
   a second coating comprising a conductive friction modifier material and disposed on the second portion of the core body to provide the fastener with a desired transition hold fit, improved lubricity, and improved electromagnetic effects protection.
Clause 2. The coated fastener of clause 1 wherein (i) the first portion of the core body comprises a threaded portion, and (ii) the second portion of the core body comprises a non-threaded portion.
Clause 3. The coated fastener of clause 2 wherein the non-threaded portion of the core body comprises a shank of the fastener.
Clause 4. The coated fastener of any of clauses 1 to 3, wherein the conductive material of the core body comprises a select one of stainless steel, nickel-based superalloy, and titanium alloy.
Clause 5. The coated fastener of clause 4 wherein the conductive friction modifier material of the second coating comprises at least one of graphite, a graphic alloy, and a graphic-based material.
Clause 6. The coated fastener of clause 4 or clause 5, wherein the dielectric material of the first coating comprises graphite.
Clause 7. The coated fastener of any of clauses 1 to 6 wherein (i) some of the first coating is also disposed on at least part of the second portion of the core body, and (ii) the second coating is disposed on top of the some of the first coating that is disposed on the at least part of the second portion of the core body.
Clause 8. The coated fastener of any of clauses 1 to 7 wherein the second coating has a coating layer thickness between about 0.1 mil and about 1 mil.
Clause 9. A coating method for a fastener having a longitudinal central axis and a non-threaded portion, the coating method comprising:
   rotating the fastener about its longitudinal central axis; and
   applying a conductive friction modifier material onto the non-threaded portion of the fastener as the fastener is rotating about its longitudinal central axis.
Clause 10. The coating method of clause 9 wherein applying the conductive friction modifier material on the non-threaded portion of the fastener as the fastener is rotating about its longitudinal central axis comprises:
   applying a graphite-based material onto the non-threaded portion of the fastener as the fastener is rotating about its longitudinal central axis.
Clause 11. The coating method of clause 9 or clause 10 wherein applying a conductive friction modifier material on the non-threaded portion of the fastener as the fastener is rotating about its longitudinal central axis comprises:
   mechanically rubbing a graphite-based material onto the non-threaded portion of the fastener as the fastener is rotating about its longitudinal central axis.
Clause 12. The coating method of clause 9 or clause 10 wherein applying a conductive friction modifier material on the non-threaded portion of the fastener as the fastener is rotating about its longitudinal central axis comprises:
   mechanically spraying a graphite-based material onto the non-threaded portion of the fastener as the fastener is rotating about its longitudinal central axis.
Clause 13. The coating method of any of clauses 9 to 12 further comprising:
   securing the fastener in place as the fastener is rotating about its longitudinal central axis and the conductive friction modifier material is being applied on the non-threaded portion of the fastener.
Clause 14. A coated fastener made of a material from a select one of stainless steel, nickel-based superalloy, and titanium alloy, and coated according to the coating method of any of clauses 9 to 13.
Clause 15. A coating apparatus for a fastener having a longitudinal central axis and a non-threaded portion, the coating apparatus comprising:
   a first device for securing the fastener in place to be coated;
   a second device for rotating the fastener about its longitudinal central axis; and
   a third device for applying a conductive friction modifier material on the non-threaded portion of the fastener when the fastener is secured in place to be coated and is rotated about its longitudinal central axis as the conductive friction modifier material is being applied on the non-threaded portion of the fastener.
Clause 16. The coating apparatus of clause 15 wherein the first device comprises a spindle mechanism having a spindle axis that is congruent with the longitudinal central axis of the fastener when the fastener is secured in place to be coated.
Clause 17. The coating apparatus of clause 15 or clause 16 wherein the second device comprises a drive mechanism that is arranged to rotate the fastener about its longitudinal central axis when the conductive friction modifier material is applied on the non-threaded portion of the fastener.
Clause 18. The coating apparatus of any of clauses 15 to 17 wherein the third device comprises a feed mechanism that is arranged to move conductive friction modifier material into contact with the non-threaded portion of the fastener to provide the conductive friction modifier material when the fastener is rotated about its longitudinal central axis.
Clause 19. The coating apparatus of any of clauses 15 to 18 wherein the conductive friction modifier material comprises a graphite-based material.
Clause 20. The coating apparatus of clause 19 wherein the graphite-based material is graphite.
Clause 21. The coating apparatus of any of clauses 15 to 20 configured to perform the method of any of clauses 9 to 14.
Clause 22. A coated fastener made using the coating apparatus of any of clauses 15 to 21.
Clause 23. The coated fastener of any of clauses 1 to 8 made using the method of any of clauses 9 to 14 or the coating apparatus of clauses 15 to 21.

Different examples of the apparatus and method disclosed herein include a variety of components, features, and functionalities. It should be understood that the various examples of the apparatus and method disclosed herein may include any of the components, features, and functionalities of any of the other examples of the apparatus and method disclosed herein in any combination, and all of such possibilities are intended to be within the scope of the present disclosure.

The above-described apparatus and method are described in the context of an aircraft. However, one of ordinary skill in the art will readily recognize that the disclosed apparatus and method are suitable for a variety of applications, and the present disclosure is not limited to aircraft manufacturing applications. For example, the disclosed apparatus and method may be implemented in various types of vehicles including, for example, helicopters, passenger ships, automobiles, marine products (boat, motors, etc.) and the like. Non-vehicle applications are also contemplated.

Although the above-description describes a coated fastener, a fastener coating apparatus, and a fastener coating method in the aviation industry in accordance with military and space regulations, it is contemplated that the coated fastener, fastener coating apparatus, and fastener coating method may be implemented in any industry in accordance with the applicable industry standards. The specific coated fastener, fastener coating apparatus, and fastener coating method can be selected and tailored depending upon the particular application.

Further, although various examples of disclosed embodiments have been shown and described, modifications may occur to those skilled in the art upon reading the specification. The present application includes such modifications and is limited only by the scope of the claims.

## Claims

1. A coated fastener (100) comprising:
a core body (130) comprising conductive material and including a first portion (110) and a second portion (120);
a first coating (140) comprising dielectric material and disposed on the first portion (110) of the core body (130); and
a second coating (150) comprising a conductive friction modifier material (151) and disposed on the second portion (120) of the core body (130).

2. The coated fastener (100) of claim 1 wherein (i) the first portion (110) of the core body (130) comprises a threaded portion (111), and (ii) the second portion (120) of the core body (130) comprises a non-threaded portion (121).

3. The coated fastener (100) of claim 2 wherein the non-threaded portion (121) of the core body (130) comprises a shank of the fastener (100).

4. The coated fastener (100) of any preceding claim wherein at least one of:
the conductive material of the core body (130) comprises a select one of stainless steel, nickel-based superalloy, and titanium alloy;
the conductive friction modifier material (151) of the second coating (150) comprises at least one of graphite, a graphic alloy, and a graphic-based material; and
the dielectric material of the first coating (140) comprises graphite.

5. The coated fastener (100) of any preceding claim, wherein (i) some of the first coating (140) is also disposed on at least part (122) of the second portion (120) of the core body (130), and (ii) the second coating (150) is disposed on top of the some of the first coating (140) that is disposed on the at least part (122) of the second portion (120) of the core body (130).

6. The coated fastener (100) of any preceding claim, wherein the second coating (150) has a coating layer thickness between about 0.1 mil and about 1 mil.

7. A coating method (300) for a fastener (100) having a longitudinal central axis (102) and a non-threaded portion (121), the coating method (300) comprising:
rotating (310) the fastener (100) about its longitudinal central axis (102); and
applying (320) a conductive friction modifier material (151) onto the non-threaded portion (121) of the fastener (100) as the fastener (100) is rotating about its longitudinal central axis (102).

8. The coating method (300) of claim 7 wherein applying the conductive friction modifier material (151) on the non-threaded portion (121) of the fastener (100) as the fastener (100) is rotating about its longitudinal central axis (102) comprises one of:
applying a graphite-based material onto the non-threaded portion (121) of the fastener (100) as the fastener (100) is rotating about its longitudinal central axis (102);
mechanically rubbing a graphite-based material onto the non-threaded portion (121) of the fastener (100) as the fastener (100) is rotating about its longitudinal central axis (102); and
mechanically spraying a graphite-based material onto the non-threaded portion (121) of the fastener (100) as the fastener (100) is rotating about its longitudinal central axis (102).

9. The coating method (300) of claim 7 or claim 8 further comprising:
securing the fastener (100) in place as the fastener (100) is rotating about its longitudinal central axis (102) and the conductive friction modifier material (151) is being applied on the non-threaded portion (121) of the fastener (100).

10. A coated fastener (100) made of a material from a select one of stainless steel, nickel-based superalloy, and titanium alloy, and coated according to the coating method (300) of any of claims 7 to 9.

11. A coating apparatus (200) for a fastener (100) having a longitudinal central axis (102) and a non-threaded portion (121), the coating apparatus (200) comprising:
a first device (210) for securing the fastener (100) in place to be coated;
a second device (220) for rotating the fastener (100) about its longitudinal central axis (102); and
a third device (230) for applying a conductive friction modifier material (151) on the non-threaded portion (121) of the fastener (100) when the fastener (100) is secured in place to be coated and is rotated about its longitudinal central axis (102) as the conductive friction modifier material (151) is being applied on the non-threaded portion (121) of the fastener (100).

12. The coating apparatus (200) of claim 11 wherein the first device (210) comprises a spindle mechanism (212) having a spindle axis (214) that is congruent with the longitudinal central axis (102) of the fastener (100) when the fastener (100) is secured in place to be coated.

13. The coating apparatus (200) of claim 11 or claim 12 wherein the second device (220) comprises a drive mechanism (222) that is arranged to rotate the fastener (100) about its longitudinal central axis (102) when the conductive friction modifier material (151) is applied on the non-threaded portion (121) of the fastener (100).

14. The coating apparatus (200) of any of claims 11 to 13 wherein the third device (230) comprises a feed mechanism (232) that is arranged to move conductive friction modifier material (151) into contact with the non-threaded portion (121) of the fastener (100) to provide the conductive friction modifier material (151) when the fastener (100) is rotated about its longitudinal central axis (102).

15. The coating apparatus (200) of any of claims 11 to 14 wherein the conductive friction modifier material (151) comprises a graphite-based material.
